# FASCICULE DE BREVET EUROPEEN

(11) **EP 3 105 063 B1**
(45) Date de publication et mention de la délivrance du brevet: **05.09.2018**
(21) Numéro de dépôt: 14833585.4
(22) Date de dépôt: 19.12.2014
(51) Int. Cl.: B41M 5/26, C03C 23/00, B23K 26/00, B23K 26/53

(54) **FEUILLE DE VERRE AVEC CODE D'IDENTIFICATION**
GLASSCHEIBE MIT IDENTIFIKATIONSCODE
GLASS SHEET WITH IDENTIFICATION CODE

(30) Priorité: 11.02.2014 FR 1451028
(43) Date de publication de la demande: 21.12.2016
(73) Titulaire: Saint-Gobain Glass France, 92400 Courbevoie (FR)
(72) Inventeur: MIMOUN, Emmanuel, F-92100 Boulogne Billancourt (FR); DUBOST, Brice, F-92400 Courbevoie (FR)
(74) Mandataire: Saint-Gobain Recherche
(86) Numéro de dépôt international: PCT/FR2014/053480
(87) Numéro de publication internationale: WO 2015/121548

(56) Documents cités:
- EP-A1- 1 589 404
- WO-A1-2012/174545
- US-A1- 2008 304 525
- K. HAYATO ET AL.: "Invisible two-dimensional barcode fabrication inside a synthetic fused silica by femtosecond laser processing using a computer-generated hologram", SPIE, PO BOX 10 BELLINGHAM WA 98227-0010, USA, 31 décembre 2011 (2011-12-31), XP040553983,

## Description

La présente invention concerne le domaine des codes d'identification marqués sur les feuilles de verre.

Il est possible d'utiliser des symboles en une dimension de type « code-barres » ou analogue et des symboles en deux dimensions de type « Datamatrix » ou analogue pour servir de codes d'identification de plaques de verre.

Ces codes peuvent contenir tout type d'information tel que par exemple un numéro servant d'identifiant de la feuille de verre. Des informations telles que le lieu de fabrication ou l'heure et la date de fabrication peuvent également être intégrées, de même que des informations de tout autre type adapté.

Les symboles sont par exemple marqués au moyen d'un rayonnement laser de tout type adapté, orienté de préférence perpendiculairement à la feuille de verre, i.e. au plan général de la feuille de verre. En effet, les symboles ainsi marqués sont généralement destinés à être lus de face en positionnant un appareil face au symbole, et donc face à l'une des deux faces principales de la feuille de verre.

Cependant, de tels symboles ne sont pas destinés à être lus lorsque les feuilles de verre sont empilées. WO-A1-2012/174545 décrit une méthode de marquage sous la surface de verre par laser pour assurer l'authenticité de médicaments. Un but de l'invention est de permettre une lecture rapide des codes présents sur des feuilles de verre, que les feuilles de verres soient isolées ou empilées.

Selon un aspect de l'invention, une feuille de verre comprend un symbole marqué à l'intérieur du verre, le symbole formant un code, le symbole étant marqué dans au moins deux dimensions dont l'épaisseur de la feuille de verre, des parties du symbole étant marquées à différentes profondeurs dans l'épaisseur de la feuille de verre.

Selon des modes particuliers de réalisation, la feuille de verre comporte en outre l'une ou plusieurs des caractéristiques suivantes prise(s) isolément ou suivant toutes les combinaisons techniquement possibles :
- chaque partie du symbole est à une profondeur unique et distincte des autres lignes, respectivement des autres colonnes ;
- les différentes parties correspondent à un découpage du symbole en différentes tranches, de préférence rectilignes et parallèles ;
- au moins certaines tranches correspondent à des lignes ou colonnes du symbole ;
- le symbole est en deux dimensions, par exemple de type Datamatrix, QR code ou analogue ;
- le symbole est parallèle ou perpendiculaire à la tranche de la feuille de verre la plus proche ;
- le symbole est marqué dans un plan incliné par rapport à une tranche de la feuille de verre et une face de la feuille de verre de telle sorte qu'il soit lisible de façon identique à la fois par la face de la feuille de verre et par la tranche de la feuille de verre ;
- ledit plan incliné est à 45° avec ladite tranche de la feuille de verre et ladite face de la feuille de verre.

L'invention a également pour objet un procédé de marquage d'un symbole formant code dans une feuille de verre, comprenant :
- le marquage d'une première partie du symbole à une première profondeur dans l'épaisseur de la feuille verre ;
- le marquage d'une deuxième partie du symbole à une deuxième profondeur dans l'épaisseur de la feuille verre, différente de la première profondeur, le marquage de la deuxième partie étant décalé du marquage de la première partie dans une autre dimension de la feuille de verre telle que la largeur ou la longueur.

L'invention a également pour objet un procédé de fabrication d'un produit verrier comprenant une feuille de verre telle que décrite ci-dessus, incluant une étape de lecture du code par la face, à un premier moment de la fabrication, notamment à un moment où la feuille de verre est seule, et une étape de lecture du code par la tranche, à un deuxième moment de la fabrication, notamment à un moment où la feuille de verre fait partie d'une pile de feuilles de verre.

L'invention sera mieux comprise à la lecture de la description qui va suivre, faite uniquement à titre d'exemple illustratif, sur la base de figures parmi lesquelles :

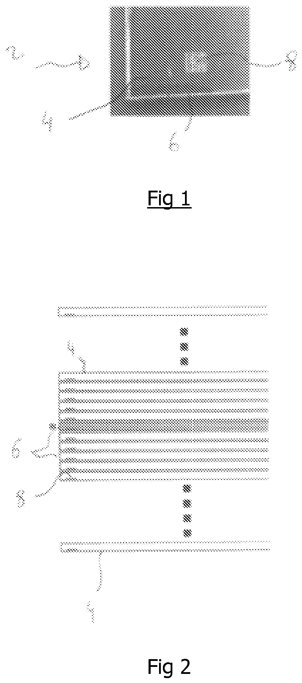

- la figure 1 est une photographie d'une feuille de verre, un symbole de type « Datamatrix » étant marqué sur la face de la feuille de verre ;
- la figure 2 est une vue schématique de côté illustrant une pile de feuilles de verre du type de la figure 1 ;
- la figure 3 est un schéma d'un symbole marqué dans une feuille de verre, selon un mode de réalisation de l'invention ;
- les figures 4A et 4B sont des vues par la face et par la tranche du symbole de la figure 3 ;
- la figure 5 illustre différents types de codes en deux dimensions.

Dans tout le texte, on entend par « face » 4 l'une des deux faces principales de la feuille de verre 2 et par tranche, l'une des quatre tranches 6 formant les côtés de la feuille de verre 2.

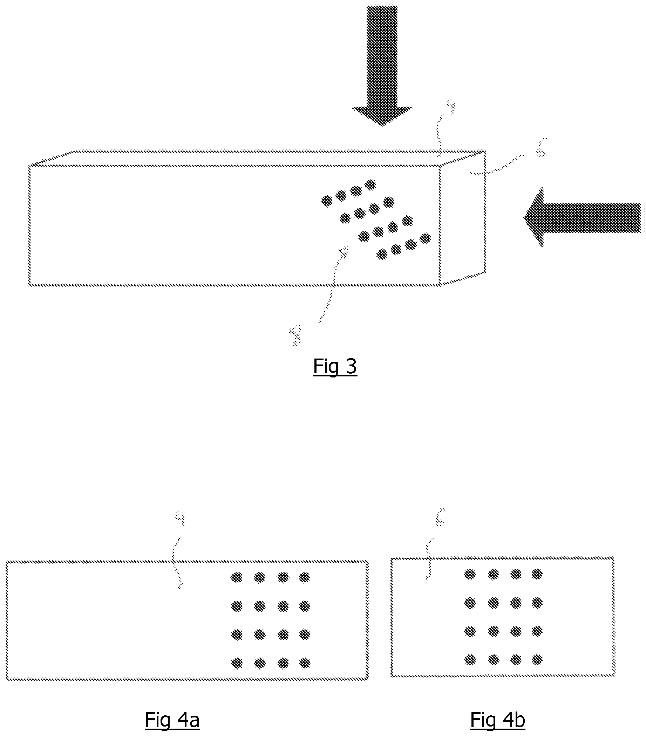

L'exemple de symbole 8 illustré sur la figure 3 permet une lecture rapide à la fois en lecture de face et en lecture par la tranche.

En effet, comme visible sur la figure 3, les colonnes du symbole 8 ont été formées dans l'épaisseur de la feuille de verre 2 à différentes profondeurs, i.e. avec chaque point d'une colonne à une même profondeur.

La figure 4A est une vue de face du symbole et la figure 4B une vue par la tranche. Comme on peut le constater, le symbole est écrasé dans sa largeur (i.e. suivant l'épaisseur de la feuille de verre, i.e. les lignes sont écrasées) mais reste lisible de façon automatique par un appareil de lecture.

Pour réaliser un tel symbole, le laser a été focalisé à des profondeurs différentes dans l'épaisseur de la feuille de verre pour chaque colonne. C'est en effet le point focal du laser qui détermine la localisation du marquage en profondeur dans la feuille de verre.

A noter également que les colonnes ont été marquées « en escalier », i.e. à des profondeurs graduellement décroissantes en partant de la tranche. En variante, il s'agit de profondeurs croissantes, ou encore de profondeurs différentes de tout type adapté pour une lecture par la tranche.

En variante, ce ne sont pas les colonnes mais les lignes qui sont marquées chacune à des profondeurs différentes.

En fait, si les colonnes sont parallèles à la tranche la plus proche, des colonnes marquées chacune à des profondeurs différentes sont préférées. Si ce sont les lignes qui sont parallèles à la tranche la plus proche, des colonnes marquées chacune à profondeur différentes sont préférées. Si le symbole est marqué dans un coin, et donc à proximité de deux tranches, la tranche permettant une lecture la plus facile sera privilégiée.

En outre, le symbole 8 n'est pas nécessairement parallèle à la tranche. Il s'agit par exemple d'un symbole 8 dont les colonnes forment un angle de 45° par rapport à la tranche (i.e. obtenu par rotation de 45° dans le plan du symbole). Dans un tel cas, le symbole est par exemple « découpé » par tranches (ou « parties ») parallèles à la tranche de la feuille de verre la plus proche et ces tranches du symbole marquées à des profondeurs différentes, i.e. les points de chaque tranche étant à une même profondeur. Ainsi, d'une manière générale, le symbole 8 est découpé en différentes tranches marquées à différentes profondeurs dans l'épaisseur de la feuille de verre.

En variante encore, les tranches de découpe ne sont pas parallèles et ont une forme de tout type adapté pour permettre une lecture par la tranche.

Ainsi, d'une manière générale, plusieurs parties du symbole sont marquées à des profondeurs différentes dans l'épaisseur de la feuille de verre.

De façon préférée, le symbole 8 est dans un plan incliné à 45° avec la tranche 6 la plus proche et avec une face 4 de telle sorte qu'il soit lisible de façon identique à la fois par la face 4 de la feuille de verre et par la tranche 6 de la feuille de verre.

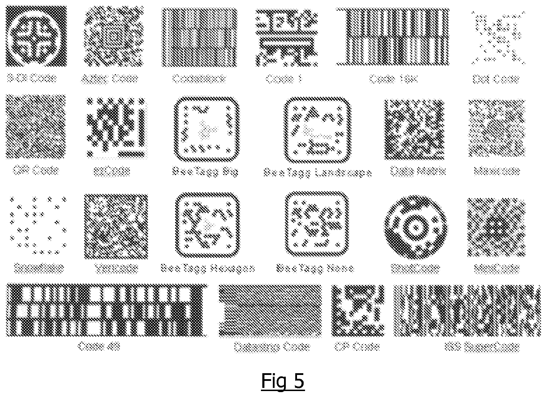

A noter également que le symbole n'est pas limité à un symbole de type Datamatrix. Il s'agit en variante d'un symbole en deux dimensions de tout type adapté. La figure 5 illustre d'autres types de codes connus, parmi eux : 3-DI code, Aztex Code, Codablock, Code 1, Code 16K, Dot Code, QR Code, ezCode, BeeTagg Big, BeeTagg Landscape, Data Matrix, Maxicode, Snpwflake, Verocode, BeeTagg Hexagon, BeeTagg None, ShotCode, MiniCode, Code 49, Datastrip Code, CP Code, ISS SuperCode.

D'une manière générale, il s'agit d'un symbole formant un code de tout type adapté.

Un objet de l'invention est ainsi une feuille de verre 2 comprenant un symbole marqué à l'intérieur du verre, le symbole 8 formant un code, dans lequel le symbole est marqué dans au moins deux dimensions dont l'épaisseur de la feuille de verre, des parties du symbole étant marquées à différentes profondeurs dans l'épaisseur de la feuille de verre.

De la sorte, le code peut être lisible à la fois par la face et par la tranche de la feuille de verre.

La feuille de verre 2 a par exemple une épaisseur comprise entre 0,5 et 19 mm, notamment entre 2 et 12 mm, par exemple entre 4 et 8 mm. En variante cependant, la feuille de verre a une épaisseur de tout type adapté.

Le symbole 8 est par exemple marqué immédiatement après découpe du ruban de verre flotté en feuilles de verre de grandes dimensions, ou immédiatement avant ou même pendant la découpe. La feuille de verre a alors une largeur supérieure à 2 mètres et une longueur supérieure à 5 mètres.

Il s'agit par exemple de verre silico-sodo-calcique mais il s'agit en variante d'un verre de tout type adapté.

D'une manière générale, il s'agit d'une feuille de verre de tout type adapté.

Pour réaliser le marquage du code, on utilise par exemple un laser pulsé UV (YAG triplé) 10ns de pulse, 30KHz, 2,5W avec un balayage de 1cm/s. A titre d'exemple, le laser est adapté pour altérer des propriétés du verre telles que sa couleur ou son indice de réfraction, là où par exemple des points du code doivent être colorés (i.e. points noirs). Il s'agit d'une manière générale d'un laser de tout type adapté pour marquer dans le volume du verre.

L'appareil de marquage est par exemple programmé pour marquer les colonnes à des profondeurs différentes et de façon parallèle à la tranche la plus proche.

L'appareil est disposé en regard d'une face de la feuille de verre.

Une première colonne est marquée avec une première distance focale correspondant à une première profondeur.

Ensuite, une deuxième colonne est marquée à une distance focale plus éloignée, i.e. à une profondeur plus importante, et ainsi de suite...

D'une manière générale, le procédé est de tout type adapté pour réaliser un symbole selon les différentes modes de réalisation de l'invention.

Pour la lecture par la tranche, dans le cas où le symbole est dans un plan incliné à 45°, le symbole sera perçu de façon identique que par la face.
En cas de faible épaisseur de la feuille de verre et donc d'un angle d'inclinaison faible du symbole, l'image par la tranche sera plus déformée et l'image par la face moins déformée. Les appareils de lecture devront alors être programmés en conséquence.

## Revendications

1. Feuille de verre (2) comprenant un symbole (8) marqué à l'intérieur du verre, le symbole formant un code,
dans lequel le symbole est marqué dans au moins deux dimensions dont l'épaisseur de la feuille de verre, des parties du symbole étant marquées à différentes profondeurs dans l'épaisseur de la feuille de verre de telle sorte qu'il soit lisible à la fois par une face de la feuille de verre et par une tranche de la feuille de verre.

2. Feuille de verre (2) selon la revendication 1, dans laquelle chaque partie du symbole (8) est à une profondeur unique et distincte des autres lignes, respectivement des autres colonnes.

3. Feuille de verre (2) selon la revendication 1 ou 2, dans laquelle les différentes parties correspondent à un découpage du symbole (8) en différentes tranches, de préférence rectilignes et parallèles.

4. Feuille de verre (2) selon la revendication précédente, dans lequel au moins certaines tranches correspondent à des lignes ou colonnes du symbole.

5. Feuille de verre (2) selon l'une quelconque des revendications précédentes, dans laquelle le symbole (8) est en deux dimensions, par exemple de type Datamatrix, QR code ou analogue.

6. Feuille de verre (2) selon l'une quelconque des revendications précédentes, dans laquelle le symbole (8) est parallèle ou perpendiculaire à la tranche de la feuille de verre la plus proche.

7. Feuille de verre (2) selon l'une quelconque des revendications précédentes, dans laquelle le symbole (8) est marqué dans un plan incliné par rapport à une tranche (6) de la feuille de verre et une face (4) de la feuille de verre de telle sorte qu'il soit lisible de façon identique à la fois par la face de la feuille de verre et par la tranche de la feuille de verre.

8. Feuille selon la revendication précédente, dans lequel ledit plan incliné est à 45° avec ladite tranche (6) de la feuille de verre et ladite face (4) de la feuille de verre.

9. Procédé de marquage d'un symbole (8) formant code dans une feuille de verre (2) de telle sorte qu'il soit lisible à la fois par une face de la feuille de verre et par la tranche de la feuille de verre comprenant :
- le marquage d'une première partie du symbole à une première profondeur dans l'épaisseur de la feuille verre ;
- le marquage d'une deuxième partie du symbole à une deuxième profondeur dans l'épaisseur de la feuille verre, différente de la première profondeur, le marquage de la deuxième partie étant décalé du marquage de la première partie dans une autre dimension de la feuille de verre telle que la largeur ou la longueur.

10. Procédé de fabrication d'un produit verrier comprenant une feuille de verre (2) selon l'une quelconque des revendications 1 à 8, incluant une étape de lecture du code par la face de la feuille de verre, à un premier moment de la fabrication, notamment à un moment où la feuille de verre n'est pas empilée avec d'autres feuilles de verre, et une étape de lecture du code par la tranche, à un deuxième moment de la fabrication, notamment à un moment où la feuille de verre fait partie d'une pile de feuilles de verre.

## Patentansprüche

1. Glasscheibe (2), umfassend ein im Innern des Glases eingraviertes Symbol (8), wobei das Symbol einen Code bildet,
wobei das Symbol mindestens in zwei Dimensionen eingraviert ist, darunter in der Dicke der Glasscheibe, wobei Teile des Symbols in verschiedenen Tiefen in der Dicke der Glasscheibe so eingraviert sind, dass es sowohl durch eine Fläche der Glasscheibe als auch durch eine Kante der Glasscheibe lesbar ist.

2. Glasscheibe (2) nach Anspruch 1, wobei sich jeder Teil des Symbols (8) in einer bestimmten und von den anderen Zeilen beziehungsweise den anderen Spalten verschiedenen Tiefe befindet.

3. Glasscheibe (2) nach Anspruch 1 oder 2, wobei die verschiedenen Teile einer Aufteilung des Symbols (8) in verschiedene, vorzugsweise geradlinige und parallele, Abschnitte entsprechen.

4. Glasscheibe (2) nach dem vorhergehenden Anspruch, wobei mindestens einige Abschnitte Zeilen oder Spalten des Symbols entsprechen.

5. Glasscheibe (2) nach einem der vorhergehenden Ansprüche, wobei das Symbol (8) zweidimensional vorliegt, zum Beispiel als Datamatrix, QR-Code oder analog.

6. Glasscheibe (2) nach einem der vorhergehenden Ansprüche, wobei das Symbol (8) parallel oder senkrecht zu der nächstgelegenen Kante der Glasscheibe ist.

7. Glasscheibe (2) nach einem der vorhergehenden Ansprüche, wobei das Symbol (8) in einer in Bezug auf eine Kante (6) der Glasscheibe und eine Fläche (4) der Glasscheibe geneigten Ebene so eingraviert ist, dass es sowohl durch die Fläche der Glasscheibe als auch durch die Kante der Glasscheibe lesbar ist.

8. Scheibe nach dem vorhergehenden Anspruch, wobei die geneigte Ebene in einem Winkel von 45° zu der Kante (6) der Glasscheibe und der Fläche (4) der Glasscheibe liegt.

9. Verfahren zum Eingravieren eines Symbols (8), das einen Code in einer Glasscheibe (2) bildet, sodass dieser sowohl durch eine Fläche der Glasscheibe als auch durch die Kante der Glasscheibe lesbar ist, umfassend:
- das Eingravieren eines ersten Teils des Symbols in einer ersten Tiefe in der Dicke der Glasscheibe;
- das Eingravieren eines zweiten Teils des Symbols in einer zweiten Tiefe in der Dicke der Glasscheibe, die sich von der ersten Tiefe unterscheidet, wobei das Eingravieren des zweiten Teils von dem Eingravieren des ersten Teils in einer anderen Dimension der Glasscheibe wie der Breite oder Länge versetzt ist.

10. Verfahren zur Herstellung eines Glasprodukts, umfassend eine Glasscheibe (2) nach einem der Ansprüche 1 bis 8, enthaltend einen Schritt des Lesens des Codes durch die Fläche der Glasscheibe zu einem ersten Zeitpunkt der Herstellung, insbesondere zu einem Zeitpunkt, zu dem die Glasscheibe nicht mit anderen Glasscheiben gestapelt ist, und einen Schritt des Lesens des Codes durch die Kante zu einem zweiten Zeitpunkt der Herstellung, insbesondere zu einem Zeitpunkt, zu dem die Glasscheibe Teil zu einem Stapel von Glasscheiben gehört.

## Claims

1. A glass sheet (2) comprising a symbol (8) marked in the interior of the glass, the symbol forming a code;
in which the symbol is marked in at least two dimensions including the dimension of the thickness of the glass sheet, portions of the symbol being marked at various depths in the thickness of the glass sheet such that it is readable both via a main face of the glass sheet and via an edge face of the glass sheet.

2. The glass sheet (2) as claimed in claim 1, in which each portion of the symbol (8) is at a unique depth that is different from the depth of the other rows and other columns, respectively.

3. The glass sheet (2) as claimed in claim 1 or 2, in which the various portions correspond to a sectioning of the symbol (8) into various sections that are preferably rectilinear and parallel.

4. The glass sheet (2) as claimed in the preceding claim, in which at least certain sections correspond to rows or columns of the symbol.

5. The glass sheet (2) as claimed in any one of the preceding claims, in which the symbol (8) is two-dimensional and for example of the Data Matrix, QR Code or analogous type.

6. The glass sheet (2) as claimed in any one of the preceding claims, in which the symbol (8) is parallel or perpendicular to the closest edge face of the glass sheet.

7. The glass sheet (2) as claimed in any one of the preceding claims, in which the symbol (8) is marked in a plane inclined relative to an edge face (6) of the glass sheet and to a main face (4) of the glass sheet such that it is identically readable both via the main face of the glass sheet and via the edge face of the glass sheet.

8. The sheet as claimed in the preceding claim, in which said inclined plane is at 45° to said edge face (6) of the glass sheet and to said main face (4) of the glass sheet.

9. A method for marking a symbol (8) forming a code in a glass sheet (2) such that it is readable both via a main face of the glass sheet and via an edge face of the glass sheet, comprising:
- marking a first portion of the symbol at a first depth in the thickness of the glass sheet;
- marking a second portion of the symbol at a second depth in the thickness of the glass sheet, said second depth being different to the first depth, the marking of the second portion being offset from the marking of the first portion in another dimension of the glass sheet such as the width or length dimension.

10. A process for manufacturing a glazing product comprising a glass sheet (2) as claimed in any one of claims 1 to 8, including a step of reading the code via the main face of the glass sheet, at a first moment during manufacture, especially at a moment when the glass sheet is not stacked with other glass sheets, and a step of reading the code via the edge face, at a second moment during manufacture, especially at a moment when the glass sheet forms part of a stack of glass sheets.
